# EUROPÄISCHE PATENTSCHRIFT

(11) **EP 3 347 226 B1**
(45) Veröffentlichungstag und Bekanntmachung des Hinweises auf die Patenterteilung: **07.08.2019**
(21) Anmeldenummer: 16758143.8
(22) Anmeldetag: 25.08.2016
(51) Int. Cl.: B60K 37/06, G01C 21/36, G06F 3/0485, G06F 3/0354

(54) **KRAFTFAHRZEUG-BEDIENVORRICHTUNG MIT TOUCHSCREEN-BEDIENUNG**
MOTOR VEHICLE OPERATOR CONTROL DEVICE WITH TOUCHSCREEN OPERATION
SYSTÈME DE COMMANDE POUR VÉHICULE AUTOMOBILE, MUNI D'UNE COMMANDE À ÉCRAN TACTILE

(30) Priorität: 11.09.2015 DE 102015011650
(43) Veröffentlichungstag der Anmeldung: 18.07.2018
(73) Patentinhaber: Audi AG, 85045 Ingolstadt (DE)
(72) Erfinder: BOUAZIZ, Tahar, 85055 Ingolstadt (DE); LOTTES, Daniel, 93309 Kelheim (DE); DI FRANCO, Onofrio, 71254 Ditzingen (DE)
(86) Internationale Anmeldenummer: PCT/EP2016/070087
(87) Internationale Veröffentlichungsnummer: WO 2017/042036

(56) Entgegenhaltungen:
- DE-A1-102012 005 800
- DE-A1-102013 000 219
- DE-A1-102013 021 814
- DE-A1-102014 015 403
- US-A1- 2013 275 924

## Beschreibung

Die Erfindung betrifft eine Bedienvorrichtung für einen Kraftwagen. Die Bedienvorrichtung weist einen Touchscreen oder Berührbildschirm auf, der zum Anzeigen einer graphischen Benutzerschnittstelle und zum Erfassen einer Wischbewegung ausgestaltet ist. Die Benutzerschnittstelle umfasst ein Bedienfeld, das mittels der Wischbewegung bedient werden kann. Das Bedienfeld kann beispielsweise ein Schieberegler sein. Mittels des Bedienfelds kann ein Wert eines Betriebsparameters eines Fahrzeuggeräts des Kraftfahrzeugs eingestellt werden. Zu der Erfindung gehören auch ein Kraftfahrzeug mit der Bedienvorrichtung sowie ein Verfahren zum Betreiben der Bedienvorrichtung.

In einem Kraftfahrzeug kann eine Benutzerschnittstelle mittels eines Berührbildschirms bereitgestellt werden. Dies erspart die Verwendung von mechanischen Bedienelementen, wie beispielsweise mechanischen Schiebereglern. Ein Bedienelement ist auf einem Berührbildschirm als Bedienfeld realisiert, innerhalb dessen der Benutzer den Berührbildschirm berühren muss, um den Schaltzustand des Bedienelements zu verändern.

Nachteilig bei einer Benutzerschnittstelle eines Berührbildschirms ist, dass die glatte Oberfläche des Berührbildschirms dem Benutzer kein taktiles Feedback bei der Bedienung eines Bedienelements bietet. Betätigt der Benutzer einen Schieberegler und ein anderes Bedienelement, das mittels Wischbewegung verschoben oder eingestellt werden muss, so kann es vorkommen, dass der Benutzer beim Ausführen der Wischbewegung von dem Bedienfeld abgleitet und die Wischbewegung außerhalb des Bedienfelds weiterführt. Dann wird das Bedienfeld nicht mehr durch die Wischbewegung bedient. Schlimmstenfalls kann sogar ein benachbartes Bedienfeld verändert oder verstellt werden, wenn die Wischbewegung in dieses benachbarte Bedienfeld hinein führt.

Deshalb neigen Benutzer von Berührbildschirmen dazu, bei der Bedienung der Benutzerschnittstelle den Berührbildschirm zu betrachten. Dies bedeutet aber, dass der Benutzer seinen Blick vom Verkehrsgeschehen abwendet. Dies kann insbesondere bei einem Fahrer zu einem Unfallrisiko führen.

Die DE 10 2014 015 403 A1 beschreibt eine Bedienvorrichtung zum Steuern von wenigstens einer Funktion einer kraftfahrzeugseitigen Einrichtung. Diese kann beispielsweise eine Heiz- und/oder Klimatisierungseinrichtung sein. Die Bedienvorrichtung weist einen berührungssensitiven Bildschirm mit wenigstens einer Funktionsfläche mit einer vorgebbaren Größe auf, wobei auf der Funktionsfläche wenigstens ein Funktionsfeld anzeigbar ist.

Der Erfindung liegt die Aufgabe zugrunde, das mangelnde taktile Feedback eines Berührbildschirms bei einer Bedienvorrichtung eines Kraftfahrzeuges zu kompensieren.

Die Aufgabe wird durch die Gegenstände und das Verfahren der unabhängigen Patentansprüche gelöst. Vorteilhafte Weiterbildungen der Erfindung sind durch die Merkmale der abhängigen Patentansprüche gegeben.

Durch die Erfindung ist eine Bedienvorrichtung für ein Kraftfahrzeug bereitgestellt. In der beschriebenen Weise weist die Bedienvorrichtung einen Berührbildschirm (Touchscreen) zum Anzeigen einer graphischen Benutzerschnittstelle und zum Erfassen zumindest einer Wischbewegung auf. Der Berührbildschirm weist eine Anzeigefläche auf, die in an sich bekannter Weise pixelbasiert sein kann. Die Anzeigefläche ist des weiteren berührungssensitiv, das heißt eine Sensormatrix erfasst eine Berührung und/oder Annäherung eines Bedienelements des Benutzers, beispielsweise eines Fingers, und signalisiert die Koordinaten der Berührstelle und/oder Annäherungsstelle. Die Sensormatrix kann beispielsweise auf der Grundlage von kapazitiven Sensoren bereitgestellt sein.

Die Benutzerschnittstelle weist erfindungsgemäß ein Bedienfeld zum Einstellen eines Werts eines Betriebsparameters eines Fahrzeuggeräts des Kraftfahrzeugs auf. Dieses Bedienfeld kann beispielsweise ein Schieberegler oder ein Bargraph oder ein Drehsteller sein. Das Bedienfeld ist dabei jeweils mittels einer Pixelgraphik dargestellt oder angezeigt. Bei der Bedienvorrichtung ist des Weiteren eine Steuereinrichtung zum Erzeugen der Benutzerschnittstelle und zum Steuern des Fahrzeuggeräts in Abhängigkeit von der zumindest einen Wischbewegung bereitgestellt. Mit Erzeugen der Benutzerschnittstelle ist gemeint, dass die Steuereinrichtung Graphikdaten erzeugt, die durch den Berührbildschirm angezeigt werden. Des Weiteren ist unter dem Erzeugen der Benutzerschnittstelle gemeint, dass die Steuereinrichtung in Abhängigkeit von der zumindest einen Wischbewegung den Anzeigezustand des Bedienfelds verändert und den Wert für den Betriebsparameter des Fahrzeuggeräts in Abhängigkeit einstellt.

Die Steuereinrichtung ist dazu eingerichtet, das Bedienfeld in Abhängigkeit von einer vorbestimmten Aktivierungsbedingung zu aktivieren und bei aktiviertem Bedienfeld den Wert in dem Bedienfeld in Abhängigkeit von der zumindest einen Wischbewegung einzustellen. Mit anderen Worten reagiert bei desaktiviertem Bedienfeld dieses nicht auf die Wischbewegung. Bei aktiviertem Bedienfeld wird die Wischbewegung in eine Veränderung des Werts des Bedienfelds umgesetzt. Dieser Wert ist dann auch der Wert, der durch die Steuereinrichtung bei dem Fahrzeuggerät als Betriebsparameterwert eingestellt wird.

Um nun dem Benutzer die Bedienung des Bedienfelds zu erleichtern, sodass er nicht durchgehend den Berührbildschirm betrachten muss, ist erfindungsgemäß die Steuereinrichtung dazu eingerichtet, bei aktiviertem Bedienfeld einen außerhalb des Bedienfelds erfassten Teil der zumindest einen Wischbewegung dem Bedienfeld zuzuordnen und den Wert des Bedienfelds in Abhängigkeit von dem außerhalb des Bedienfelds erfassten Teil einzustellen. Mit anderen Worten kann die Wischbewegung teilweise oder ganz außerhalb des Bedienfeldes ausgeführt werden. Falls das Bedienfeld aktiviert ist, wird dennoch der Wert des Bedienfelds durch die Steuereinrichtung in Abhängigkeit von der Wischbewegung eingestellt.

Durch die Erfindung ergibt sich der Vorteil, dass ein Benutzer die Wischbewegung teilweise oder ganz auch außerhalb des Bedienfelds ausführen kann. Der Benutzer muss die Wischbewegung daher nicht besonders präzise ausführen.

Die Steuereinrichtung ist dazu eingerichtet, bei zumindest einer Wischbewegung das Bedienfeld zu aktivieren, falls als Aktivierungsbedingung ein Anfangspunkt der Wischbewegung außerhalb des Bedienfelds liegt und eine Anfangsrichtung der Wischbewegung entlang einer vorbestimmten Richtungsachse oder in eine vorbestimmte Richtung ausgerichtet ist. Beispielsweise können also zwei Bedienfelder bereitgestellt sein, die jeweils linear entlang einer Stellachse verstellbar sind, wobei dann die beiden Stellachsen senkrecht zueinander ausgerichtet sein können. Fängt die Wischbewegung nun parallel zu einer der Stellachsen an, so kann dasjenige Bedienfeld, dessen Stellachse parallel zur Anfangsrichtung der Wischbewegung ausgerichtet ist, ausgewählt werden. Hierdurch ergibt sich der Vorteil, dass ein Bedienfeld auch von außerhalb des Bedienfelds aktivierbar ist.

Zu der Erfindung gehören auch optionale Weiterbildungen, durch deren Merkmale sich zusätzliche Vorteile ergeben.

Gemäß einer Weiterbildung ist die Steuereinrichtung dazu eingerichtet, bei dem Bedienfeld den Wert des Betriebsparameters in Abhängigkeit von einem Linearanteil der Wischbewegung entlang einer vorbestimmten Stellachse des Bedienfelds festzulegen. Mit anderen Worten handelt es sich bei dem Bedienfeld also um beispielsweise einen linearen Schieberegler oder einen Bargraphen. Der Linearanteil wird dabei durch Projizieren der Wischbewegung auf die Stellachse ermittelt. Hierdurch ergibt sich der Vorteil, dass auch bei einer gekrümmten oder welligen Wischbewegung der Wert eindeutig und/oder für den Benutzer nachvollziehbar festgelegt wird.

Weitere Weiterbildungen der Erfindung betreffen das Aktivieren des Bedienfelds.

Gemäß einer Weiterbildung ist die Steuereinrichtung dazu eingerichtet, bei zumindest einer Wischbewegung das Bedienfeld zu aktivieren, falls als Aktivierungsbedingung ein Anfangspunkt der Wischbewegung innerhalb des Bedienfelds liegt. Hierdurch ergibt sich der Vorteil, dass eindeutig zwischen mehreren Bedienfeldern ausgewählt werden kann.

Weitere Weiterbildungen betreffen das Verknüpfen der Wischbewegung zu dem eingestellten Wert.

Eine Weiterbildung hierzu sieht vor, dass die Steuereinrichtung dazu eingerichtet ist, während zumindest einer Wischbewegung bei dem Bedienfeld den Wert in Abhängigkeit von einer Bewegungsweite der Wischbewegung einzustellen. Mit anderen Worten wird ausgehend von einem Anfangswert der neue Wert in Abhängigkeit von der Bewegungsweite eingestellt. Es handelt sich also um eine relative Wertänderung, die sich durch die Bewegungsweite ergibt. Hierdurch ergibt sich der Vorteil, dass der Wert unabhängig von einem Anfangspunkt der Wischbewegung nicht sprunghaft, sondern nur proportional zur Bewegungsweite verändert wird.

Gemäß einer Weiterbildung ist dagegen vorgesehen, dass die Steuereinrichtung dazu eingerichtet ist, während zumindest einer Wischbewegung bei dem Bedienfeld den Wert in Abhängigkeit von einem aktuellen Berührpunkt eines die Wischbewegung ausführenden Eingabeelements einzustellen. Bei dem Eingabeelement kann es sich beispielsweise um einen Finger oder einen Stab handeln. Diese Weiterbildung weist den Vorteil auf, dass der Benutzer den gewünschten neuen Wert besonders schnell einstellen kann, indem er durch die Wischbewegung den Berührpunkt zu einem korrespondierenden Ort auf dem Berührbildschirm lenkt.

Eine Weiterbildung betrifft das Deaktivieren des Bedienfelds. Bei dieser Weiterbildung ist die Steuereinrichtung dazu eingerichtet, nach Aktivieren des Bedienfelds das aktivierte Bedienfeld nach einer vorbestimmten Zeitdauer nach einer letzten erfassten Wischbewegung zu desaktivieren. Hierdurch ergibt sich der Vorteil, dass der Benutzer auf den Berührbildschirm umgreifen kann und/oder wiederholt eine Wischbewegung ausführen kann und hierdurch schrittweise den Wert einstellen kann. Die Zeitdauer kann beispielsweise in einem Bereich von 1 Sekunde bis 5 Sekunden liegen.

Wie bereits ausgeführt, gehört zu der Erfindung auch ein Kraftfahrzeug. Bei dem erfindungsgemäßen Kraftfahrzeug sind ein Fahrzeuggerät sowie eine Bedienvorrichtung für das Fahrzeuggerät bereitgestellt. Die Bedienvorrichtung ist eine Ausführungsform der erfindungsgemäßen Bedienvorrichtung. Die Bedienvorrichtung ist zum Bedienen des Fahrzeuggeräts mit diesem gekoppelt. Bei dem erfindungsgemäßen Kraftfahrzeug ergibt sich der Vorteil, dass ein Benutzer, insbesondere ein Fahrer, während der Bedienung des Bedienfelds der Benutzerschnittstelle nicht dauerhaft den Berührbildschirm betrachten muss, damit er mit dem Finger oder einem anderen Eingabeelement die Wischbewegung durchgehend innerhalb des Bedienfelds durchführt.

Des Weiteren gehört zu der Erfindung auch ein Verfahren zum Betreiben einer Bedienvorrichtung für ein Kraftfahrzeug. Bei dem Verfahren wird durch eine Steuereinrichtung eine graphische Benutzerschnittstelle auf einem Berührbildschirm erzeugt und ein Fahrzeuggerät in Abhängigkeit von zumindest einer über den Berührbildschirm erfassten Wischbewegung gesteuert. Die Benutzerschnittstelle weist in der beschriebenen Weise ein Bedienfeld zum Einstellen eines Werts eines Betriebsparameters des Fahrzeuggeräts auf. Bei dem Bedienfeld kann es sich dabei beispielsweise um einen Schieberegler, einen Bargraphen oder einen Drehsteller handeln. Durch die Steuereinrichtung wird das Bedienfeld in Abhängigkeit von einer vorbestimmten Aktivierungsbedingung aktiviert und bei aktiviertem Bedienfeld der Wert des Bedienfelds, also der bei dem Fahrzeuggerät einzustellende Wert des Betriebsparameters, in Abhängigkeit von der zumindest einen Wischbewegung eingestellt. Hierbei wird durch die Steuereinrichtung bei aktiviertem Bedienfeld ein außerhalb des Bedienfelds erfasster Teil der zumindest einen Wischbewegung dem Bedienfeld zugeordnet und der Wert in Abhängigkeit von dem außerhalb des Bedienfelds erfassten Teil eingestellt. Natürlich bedeutet dies auch, dass ein innerhalb des Bedienfelds erfasster Teil der Wischbewegung zum Einstellen des Werts genutzt wird. Die Steuereinrichtung aktiviert das Bedienfeld bei zumindest einer Wischbewegung, falls als Aktivierungsbedingung ein Anfangspunkt der Wischbewegung außerhalb des Bedienfelds liegt und eine Anfangsrichtung der Wischbewegung entlang einer vorbestimmten Richtungsachse oder in eine vorbestimmte Richtung ausgerichtet ist.

Das erfindungsgemäße Kraftfahrzeug ist bevorzugt als Kraftwagen, insbesondere als Personenkraftwagen, ausgestaltet.

Zu der Erfindung gehören auch Weiterbildungen des erfindungsgemäßen Verfahrens, die Merkmale aufweisen, wie sie bereits im Zusammenhang mit den Weiterbildungen der erfindungsgemäßen Bedienvorrichtung beschrieben worden sind. Aus diesem Grund sind die entsprechenden Weiterbildungen des erfindungsgemäßen Verfahrens hier nicht noch einmal beschrieben.

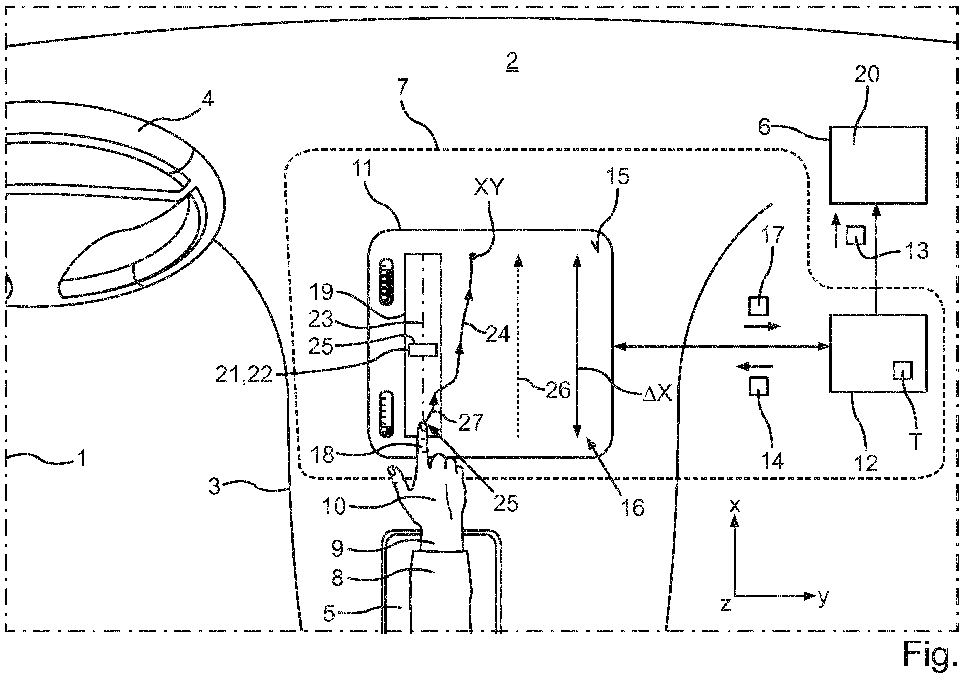

Im Folgenden ist ein Ausführungsbeispiel der Erfindung beschrieben. Hierzu zeigt die einzige Figur (Fig.) eine schematische Darstellung einer Ausführungsform des erfindungsgemäßen Kraftfahrzeugs.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt ein Kraftfahrzeug 1, bei dem es sich beispielsweise um einen Kraftwagen, insbesondere einen Personenkraftwagen, handeln kann.

Die Figur zeigt ein Kraftfahrzeug 1, bei dem es sich beispielsweise um einen Kraftwagen, insbesondere einen Personenkraftwagen, handeln kann. Dargestellt ist eine Draufsicht auf einen Fahrzeuginnenraum 2 des Kraftfahrzeugs 1. Zur besseren Orientierung ist eine Richtung einer Fahrzeuglängsachse X, einer Fahrzeugquerachse Y und einer Fahrzeughochachse Z veranschaulicht. Die Hochachse Z ist senkrecht zur Zeichenebene der Figur ausgerichtet. Gezeigt sind eine Mittelkonsole 3, ein Lenkrad 4, ein Auflageelement 5, ein Fahrzeuggerät 6 und eine Bedienvorrichtung 7 für das Fahrzeuggerät 6. Das Auflageelement 5 ist oberhalb oder über der Mittelkonsole 3 angeordnet. Das Auflageelement 5 stellt eine Armlehne dar, auf welcher ein Fahrer 8 seinen Unterarm 9 und/oder seine Hand 10 ablegen kann, während der Fahrer 8 in einem (nicht dargestellten) Fahrersitz sitzt. Der Fahrer 8 stellt einen Benutzer der Bedienvorrichtung 7 dar.

Mittels der Bedienvorrichtung 7 kann der Fahrer 8 das Fahrzeuggerät 6 bedienen. Bei dem Fahrzeuggerät 6 kann es sich beispielsweise um eine Klimatisierungseinrichtung für den Fahrzeuginnenraum 6 handeln. Bei dem Fahrzeuggerät 6 kann es sich auch beispielsweise um ein Infotainmentsystem (Informations-Unterhaltungssystem) des Kraftfahrzeugs 1 handeln.

Die Bedienvorrichtung 7 weist einen Berührbildschirm 11 und eine Steuereinrichtung 12 auf. Die Steuereinrichtung 12 erzeugt ein Steuersignal 13 für das Fahrzeuggerät 6 in Abhängigkeit von einer Bedienung des Berührbildschirms 11 durch den Benutzer 8.

Hierzu kann die Steuereinrichtung 12 Graphikdaten 14 erzeugen, durch welche auf einer Anzeigefläche 15 des Berührbildschirms 11 eine graphische Benutzerschnittstelle 16 für das Fahrzeuggerät 6 angezeigt oder dargestellt wird. Die Anzeigefläche 15 ist berührungssensitiv. Bei einer Berührung auf der Anzeigefläche 15 erzeugt der Berührbildschirm 11 Berührdaten 17, welche beispielsweise eine aktuelle Berührkoordinate beschreiben, an welcher eine Berührung der Anzeigefläche 15 sensiert oder erkannt wurde. Die Berührung kann der Fahrer 8 mit einem Finger 18 der Hand 10 ausführen. Der Finger 18 stellt somit ein Eingabeelement dar. Die berührungssensitive Anzeigefläche kann beispielsweise auf der Grundlage einer Sensormatrix gebildet sein. Die Sensoren der Sensormatrix können beispielsweise jeweils als kapazitiver Sensor ausgestaltet sein.

Die Benutzerschnittstelle 16 weist insbesondere ein Bedienfeld 19 auf. Weitere Bedienfelder sind der Übersichtlichkeit halber nicht dargestellt. Mittels des Bedienfelds 19 kann ein Betriebsparameter 20 in dem Fahrzeuggerät 6 eingestellt werden. Ein aktueller Wert 21 des Betriebsparameters 20 kann beispielsweise durch ein jeweiliges Anzeigeelement 22 auf dem Bedienfeld 19 veranschaulicht oder angezeigt sein. Der Betriebsparameter 20 kann beispielsweise eine Solltemperatur für eine Klimatisierungsanlage oder eine Gebläseleistung eines Gebläses der Klimatisierungsanlage sein. Bei dem Anzeigeelement 21 kann es sich jeweils beispielsweise um einen Bargraphen oder ein Schieberelement handeln.

Das Anzeigeelement 22 kann bei dem Bedienfeld 19 entlang einer vorbestimmten Stellachse 23 verschoben werden. Hierdurch wird der aktuelle Wert 21 entsprechend verändert oder eingestellt. Beispielsweise kann die Stellachse 23 (wie gezeigt) parallel zur Fahrzeuglängsachse X angeordnet sein. Die Stellachse 23 kann auch parallel zur Fahrzeugquerachse Y ausgerichtet sein.

Die entsprechende Einstellung des Werts 21 im Betriebsparameter 20 wird durch die Steuereinrichtung 12 mittels des Steuersignals 13 bewirkt. Die Steuereinrichtung 12 kann hierzu beispielsweise auf der Grundlage eines Mikrocontrollers oder eines Mikroprozessors realisiert sein.

Zum Verändern oder Einstellen des Werts 21 berührt der Fahrer 8 mit dem Finger 18 die berührungssensitive Anzeigefläche 15 und führt eine Wischbewegung 24 aus. Mit anderen Worten führt er unter Beibehaltung der Berührung des Fingers 18 an der Anzeigefläche 15 eine Positionsänderung oder eine Bewegungstrajektorie aus.

Die Wischbewegung 24 weist einen Anfangspunkt 25 auf, an welchem die Wischbewegung 29 beginnt und/oder der Fahrer 8 mit dem Finger 18 auf der Anzeigefläche 15 aufgesetzt hat.

Durch die Steuereinrichtung 12 werden anhand der Berührdaten 17 der Anfangspunkt 25 und die Wischbewegung 24 erkannt. Das Bedienfeld 19 ist zunächst desaktiviert. Die Steuereinrichtung 12 legt hierbei fest, ob das Bedienfeld 19 aktiviert werden soll.

Hierbei können mehrere Varianten vorgesehen sein.

Eine Variante sieht vor, dass in Abhängigkeit von einer Position oder Lage des Anfangspunkts 25 auf der Anzeigefläche 15 festgelegt wird, ob das Bedienfeld 19 aktiviert wird. In dem in der Figur veranschaulichten Beispiel liegt der Anfangspunkt 25 innerhalb des Bedienfelds 19. Daher wird durch die Steuereinrichtung 12 das Bedienfeld 19 aktiviert und während der Wischbewegung 29 betrieben. Hierbei kann ein lineare Anteil 26 zum Festlegen des Werts 21 ermittelt werden. Die Wertänderung des Werts 21 des Bedienfelds 19 wird dabei in Abhängigkeit von dem Linearanteil 26 der Wischbewegung 24 eingestellt. Der Linearanteil 26 ist derjenige Anteil der Wischbewegung 24 der sich durch eine Projektion der Trajektorie der Wischbewegung 24 auf die Stellachse 23 des Bedienfelds 19 ergibt. Der Linearanteil 26 legt entsprechend den Wert 21 des Betriebsparameters 20 durch das Bedienfeld 19 fest. Entsprechend wird das Anzeigeelement 22 auf den jeweils neu eingestellten Wert 21 eingestellt oder verschoben.

Eine Variante sieht vor, dass unabhängig von einer Lage des Anfangspunkts 25 eine initiale Bewegungsrichtung oder Anfangsrichtung 27 der Wischbewegung 24 durch die Steuereinrichtung 12 ermittelt wird und in Abhängigkeit der Anfangsrichtung 27 das Bedienfeld 19 ausgewählt wird. In dem veranschaulichten Beispiel ist die Anfangsrichtung 27 parallel oder zumindest zu einem überwiegenden Anteil parallel zur Stellachse 23 des Bedienelements 19 ausgerichtet. Entsprechend wird durch die Steuereinrichtung 12 das Bedienelement 19 aktiviert und während der Wischbewegung 24 betrieben.

Wie in der Figur veranschaulicht, ermöglichen alle drei Varianten, dass der Fahrer 8 mit dem Finger 18 seine Wischbewegung 24 auch außerhalb des Bedienfelds 19 ausführen kann und dennoch das Bedienfeld 19 gemäß der Wischbewegung 24 eingestellt wird.

Durch rechtwinklige Anordnung von Stellachsen ergibt sich in der beschriebenen Weise eine orthogonal unabhängige Bedienung.

Die Bedienung bzw. Einstellung/Verstellung einer Größe (z.B. Lüfter, Klima) wird somit fortgesetzt (Toleranzbedienung), obwohl ein dargestellter Regler z.B. nur anfangs per Touchgeste berührt wurde, die Bewegung des Fingers jedoch nicht auf dem Balken des Reglers bleibt, sondern an anderer Stelle des Touchscreens weitergeführt wird.

Vorteil ist eine Intuitive Bedienung, keine Ablenkung des Fahrers während der Fahrt, da er nicht mehr darauf achten muss, die gesamte Einstellungsprozedur hinweg genau den Regler zu treffen.

Die Implementierung dieser Funktion, dass bei Beginn einer Parameterverstellung/-einstellung das Einstellen an jedem Ort auf dem Touchscreen fortgeführt werden kann ist in den beschriebenen Varianten möglich.

Eine Abwandlung ist, das erstmalige Treffen des Bereich auch gleich wegzulassen und feste Gesten, wie nach links/rechts streichen (Lüfterdrehzahl reduzieren/erhöhen) und nach unten/oben (Temperatur Klima reduzieren/erhöhen) zu implementieren. Die verbessert die Blindbedienbarkeit.

In Bezug auf den eingestellten Wert 21 kann zum einen vorgesehen sein, dass der Wert 21 durch Auswerten der relativen Bewegung des Fingers 18 bei der Wischbewegung 24 ausgewertet oder berücksichtigt oder genutzt wird. Hierzu wird eine jeweilige Bewegungsweite ΔX der Wischbewegung 24 entlang der Stellachse 23 ausgewertet. Mit anderen Worten wird eine jeweilige Länge des Linearanteils 26 dahingehend ausgewertet, dass diese Bewegungsweite ΔX die Veränderung des Ausgangswerts zum Endwert hin, also zum neuen Wert 21, bei dem Bedienfeld 19 festlegt.

Alternativ dazu kann vorgesehen sein, dass der Wert 21 in Abhängigkeit von einer Endkoordinate XY der Wischbewegung 24 festgelegt wird. Mit anderen Worten wird der Wert 21 jeweils absolut in Abhängigkeit von der aktuellen Berührposition des Fingers 18 auf der Anzeigefläche 15 festgelegt.

Nach Aktivieren des Bedienfelds 19 kann nach dem Beenden der Wischbewegung 24, wenn der Benutzer den Finger 18 von der Anzeigefläche 15 gelöst hat, vorgesehen sein, dass das aktivierte Bedienfeld 19 noch für eine Zeitdauer T aktiviert bleibt. Hierdurch kann der Benutzer unabhängig von einem Berührort auf der Anzeigefläche 15 noch eine Korrektur vornehmen. Die Zeitdauer T kann durch die Steuereinrichtung 12 überwacht werden.

Insgesamt zeigt das Beispiel, wie durch die Erfindung eine Toleranzbedienung oder Weiterausführung der Bedienung bei Verlassen des Bedienbereichs (Regler, Balken) des entsprechenden Bedienelements (z.B. Klimaregler im Touchscreen) bereitgestellt werden kann.

## Patentansprüche

1. Bedienvorrichtung (7) für ein Kraftfahrzeug (1), aufweisend:
- einen Berührbildschirm (11) zum Anzeigen einer graphischen Benutzerschnittstelle (16) und zum Erfassen zumindest einer Wischbewegung (24),
- eine Steuereinrichtung (12) zum Erzeugen der Benutzerschnittstelle (16) und zum Steuern eines Fahrzeuggeräts (6) in Abhängigkeit von der zumindest einen Wischbewegung (24), wobei die Benutzerschnittstelle (16) ein Bedienfeld (19) zum Einstellen eines Werts (21) eines Betriebsparameters (20) des Fahrzeuggeräts aufweist und die Steuereinrichtung (12) dazu eingerichtet ist, das Bedienfeld (19) in Abhängigkeit von einer vorbestimmten Aktivierungsbedingung zu aktivieren und bei aktiviertem Bedienfeld (19) den Wert (21) in dem Bedienfeld (19) in Abhängigkeit von der zumindest einen Wischbewegung (24) einzustellen, wobei
die Steuereinrichtung (12) dazu eingerichtet ist, bei aktiviertem Bedienfeld (19) einen außerhalb des Bedienfelds (19) erfassten Teil der zumindest einen Wischbewegung (24) dem Bedienfeld (19) zuzuordnen und den Wert (21) in Abhängigkeit von dem außerhalb des Bedienfelds (19) erfassten Teil einzustellen;
**dadurch gekennzeichnet, dass**
die Steuereinrichtung (12) dazu eingerichtet ist, bei zumindest einer Wischbewegung (24) das Bedienfeld (19) zu aktivieren, falls als Aktivierungsbedingung ein Anfangspunkt (25) der Wischbewegung (24) außerhalb des Bedienfelds (19) liegt und eine Anfangsrichtung (27) der Wischbewegung (24) entlang einer vorbestimmten Richtungsachse (23) oder in eine vorbestimmte Richtung ausgerichtet ist.

2. Bedienvorrichtung (7) nach Anspruch 1, wobei die Steuereinrichtung (12) dazu eingerichtet ist, bei dem Bedienfeld (19) den Wert (21) in Abhängigkeit von einem Linearanteil (26) der Wischbewegung (24) entlang einer vorbestimmten Stellachse (23) des Bedienfelds (19) festzulegen und den Linearanteil (26) durch Projizieren der Wischbewegung (24) auf die Stellachse (23) zu ermitteln.

3. Bedienvorrichtung (7) nach einem der vorhergehenden Ansprüche, wobei die Steuereinrichtung (12) dazu eingerichtet ist, bei zumindest einer Wischbewegung (24) das Bedienfeld (19) zu aktivieren, falls als Aktivierungsbedingung ein Anfangspunkt (25) der Wischbewegung (24) innerhalb des Bedienfelds (19) liegt.

4. Bedienvorrichtung (7) nach einem der vorhergehenden Ansprüche, wobei die Steuereinrichtung (12) dazu eingerichtet ist, während zumindest einer Wischbewegung (24) bei dem Bedienfeld (19) den Wert (21) in Abhängigkeit von einer Bewegungsweite (ΔX) der Wischbewegung einzustellen.

5. Bedienvorrichtung (7) nach einem der vorhergehenden Ansprüche, wobei die Steuereinrichtung (12) dazu eingerichtet ist, während zumindest einer Wischbewegung (24) bei dem Bedienfeld (19) den Wert (21) in Abhängigkeit von einem aktuellen Berührpunkt (XY) eines die Wischbewegung (24) ausführenden Eingabeelements (18) einzustellen.

6. Bedienvorrichtung (7) nach einem der vorhergehenden Ansprüche, wobei die Steuereinrichtung (12) dazu eingerichtet ist, nach Aktivieren des Bedienfeld (19) das aktivierte Bedienfeld (19) nach einer vorbestimmten Zeitdauer (T) nach einer letzten erfassten Wischbewegung (24) zu desaktivieren.

7. Bedienvorrichtung (7) nach einem der vorhergehenden Ansprüche, wobei das Bedienfeld als Schieberegler oder Bargraph oder Drehsteller ausgestaltet ist.

8. Kraftfahrzeug (1) mit einem Fahrzeuggerät (6) und einer Bedienvorrichtung (7) nach einem der vorhergehenden Ansprüche, wobei die Bedienvorrichtung (7) zum Bedienen des Fahrzeuggeräts (6) mit diesem gekoppelt ist.

9. Verfahren zum Betreiben einer Bedienvorrichtung (7) für ein Kraftfahrzeug (1), wobei durch eine Steuereinrichtung (12) eine graphische Benutzerschnittstelle (16) auf einem Berührbildschirm (11) erzeugt wird und ein Fahrzeuggerät (6) in Abhängigkeit von zumindest einer über den Berührbildschirm (11) erfassten Wischbewegung (24) gesteuert wird, wobei die Benutzerschnittstelle (16) ein Bedienfeld (19) zum Einstellen eines Werts (21) eines Betriebsparameters (20) des Fahrzeuggeräts (6) aufweist und durch die Steuereinrichtung (12) das Bedienfeld (19) in Abhängigkeit von einer vorbestimmten Aktivierungsbedingung aktiviert und bei aktiviertem Bedienfeld (19) der Wert (21) in dem Bedienfeld (19) in Abhängigkeit von der zumindest einen Wischbewegung (24) eingestellt wird, wobei
durch die Steuereinrichtung (12) bei aktiviertem Bedienfeld (19) ein außerhalb des Bedienfelds (19) erfasster Teil der zumindest einen Wischbewegung (24) dem Bedienfeld (19) zugeordnet und der Wert in Abhängigkeit von dem außerhalb des Bedienfelds (19) erfassten Teil eingestellt wird;
**dadurch gekennzeichnet, dass**
die Steuereinrichtung (12) das Bedienfeld (19) bei zumindest einer Wischbewegung (24) aktiviert, falls als Aktivierungsbedingung ein Anfangspunkt (25) der Wischbewegung (24) außerhalb des Bedienfelds (19) liegt und eine Anfangsrichtung (27) der Wischbewegung (24) entlang einer vorbestimmten Richtungsachse (23) oder in eine vorbestimmte Richtung ausgerichtet ist.

## Claims

1. Control device (7) for a motor vehicle (1), having:
- a touchscreen (11) configured to display a graphical user interface (16) and to capture at least one swiping movement (24),
- a control device (12) for generating the user interface (16) and for controlling a vehicle device (6) as a function of the at least one swiping movement (24), the user interface (16) having an operating field (19) for setting a value (21) of an operating parameter (20) of the vehicle device, and the control device (12) is configured to activate the operating field (19) as a function of a predetermined activation condition and, once the operating field (19) is activated, to set the value (21) in the operating field (19) as a function of the at least one swiping movement (24), wherein
the control device (12) is configured, when the operating field (19) is activated, to set a portion of the at least one swiping movement (24) captured outside the operating field (19) to the operating field (19), and to set the value (21) as a function of the portion that is captured outside the operating field (19),
**characterised in that**
the control device (12) is configured to activate the operating field (19) with at least one swiping movement (24), if as an activation condition a starting point (25) of the swiping movement (24) is outside of the operating field (19) and a starting direction (27) of the swiping movement (24) is aligned along a predefined directional axis (23) or in a predefined direction.

2. Control device (7) according to claim 1, wherein the control device (12) is configured to define in the operating field (19) the value (21) as a function of a linear component (26) of the swiping movement (24) along a predetermined adjusting axis (23) of the operating field (19) and to ascertain the linear component (26) by projecting the swiping movement (24) onto the adjusting axis (23).

3. Control device (7) according to any of the preceding claims, wherein the control device (12) is configured to activate the operating field (19) with at least one swiping movement (24) when, as the activation condition, a starting point (25) of the swiping movement (24) lies within the operating field (19).

4. Control device (7) according to any of the preceding claims, wherein the control device (12) is configured to set, during at least one swiping movement (24) in the operating field (19), the value (21) as a function of an extent of movement (ΔX) of the swiping movement.

5. Control device (7) according to any of the preceding claims, wherein the control device (12) is configured to set, during at least one swiping movement (24) in the operating field (19) the value (21) as a function of a current point of touch (XY) of an input element (18) that performs the swiping movement (24).

6. Control device (7) according to any of the preceding claims, wherein the control device (12) is configured to deactivate, after the activation of the operating field (19), the activated operating field (19) after a predetermined time period (T) has elapsed since a last captured swiping movement (24).

7. Control device (7) according to any of the preceding claims, wherein the operating field is configured as a slider or bar graph or rotary adjuster.

8. Motor vehicle (1) with a vehicle device (6) and a control device (7) according to any of the preceding claims, wherein the control device (7) for operating the vehicle device (6) is coupled to the latter.

9. Method for operating a control device (7) for a motor vehicle (1), wherein by means of a control device (12) a graphical user interface (16) is produced on a touchscreen (11) and a vehicle device (6) is controlled as a function of at least one swiping movement (24) detected by the touchscreen (11), wherein the user interface (16) has an operating field (19) for setting a value (21) of an operating parameter (20) of the vehicle device (6), and by means of the control device (12) activates the operating field (19) as a function of a predetermined activation condition, and when the operating field (19) is activated the value (21) in the operating field (19) is set as a function of the at least one swiping movement (24), wherein
by means of the control device (12) when the operating field (19) is activated, a portion of the at least one swiping movement (24) that is captured outside the operating field (19) is assigned to the operating field (19) and the value is set as a function of the portion that is captured outside the operating field (19);
**characterised in that**
the control device (12) activates the operating field (19) with at least one swiping movement (24) if as an activation condition a starting point (25) of the swiping movement (24) is outside of the operating field (19) and a starting direction (27) of the swiping movement (24) is aligned along a predefined directional axis (23) or in a predefined direction.

## Revendications

1. Système de commande (7) pour un véhicule automobile (1), présentant :
- un écran tactile (11) pour l'affichage d'une interface utilisateur (16) graphique et pour la détection d'au moins un mouvement de balayage (24),
- un dispositif de commande (12) pour la génération de l'interface utilisateur (16) et pour la commande d'un appareil de véhicule (6) en fonction de l'au moins un mouvement de balayage (24), dans lequel l'interface utilisateur (16) présente un champ de commande (19) pour le réglage d'une valeur (21) d'un paramètre de fonctionnement (20) de l'appareil de véhicule et le dispositif de commande (12) est agencé pour activer le champ de commande (19) en fonction d'une condition d'activation prédéterminée et pour régler, lorsque le champ de commande (19) est activé, la valeur (21) dans le champ de commande (19) en fonction de l'au moins un mouvement de balayage (24), dans lequel
le dispositif de commande (12) est agencé pour associer, lorsque le champ de commande (19) est activé, une partie détectée à l'extérieur du champ de commande (19) de l'au moins un mouvement de balayage (24) au champ de commande (19) et de régler la valeur (21) en fonction de la partie détectée à l'extérieur du champ de commande (19) ;
**caractérisé en ce que**
le dispositif de commande (12) est agencé pour activer le champ de commande (19) lors d'au moins un mouvement de balayage (24) si, en tant que condition d'activation, un point de départ (25) du mouvement de balayage (24) se situe à l'extérieur du champ de commande (19) et une direction de départ (27) du mouvement de balayage (24) est orientée le long d'un axe de direction (23) prédéterminé ou dans une direction prédéterminée.

2. Système de commande (7) selon la revendication 1, dans lequel le dispositif de commande (12) est agencé pour fixer sur le champ de commande (19) la valeur (21) en fonction d'une part linéaire (26) du mouvement de balayage (24) le long d'un axe de réglage (23) prédéterminé du champ de commande (19) et déterminer la part linéaire (26) par projection du mouvement de balayage (24) sur l'axe de réglage (23).

3. Système de commande (7) selon l'une quelconque des revendications précédentes, dans lequel le dispositif de commande (12) est agencé pour activer le champ de commande (19) lors d'au moins un mouvement de balayage (24) si, en tant que condition d'activation, un point de départ (25) du mouvement de balayage (24) se situe à l'intérieur du champ de commande (19).

4. Système de commande (7) selon l'une quelconque des revendications précédentes, dans lequel le dispositif de commande (12) est agencé pour régler, pendant au moins un mouvement de balayage (24) sur le champ de commande (19), la valeur (21) en fonction d'une largeur de mouvement (ΔX) du mouvement de balayage.

5. Système de commande (7) selon l'une quelconque des revendications précédentes, dans lequel le dispositif de commande (12) est agencé pour régler, pendant au moins un mouvement de balayage (24) sur le champ de commande (19), la valeur (21) en fonction d'un point de contact actuel (XY) d'un élément de saisie (18) effectuant le mouvement de balayage (24).

6. Système de commande (7) selon l'une quelconque des revendications précédentes, dans lequel le dispositif de commande (12) est agencé pour désactiver, après l'activation du champ de commande (19), le champ de commande (19) activé après une durée prédéterminée (T) après un dernier mouvement de balayage (24) détecté.

7. Système de commande (7) selon l'une quelconque des revendications précédentes, dans lequel le champ de commande est réalisé en tant que curseur ou bargraphe ou actionneur rotatif.

8. Véhicule automobile (1) avec un appareil de véhicule (6) et un système de commande (7) selon l'une quelconque des revendications précédentes, dans lequel le système de commande (7) est couplé pour la commande de l'appareil de véhicule (6) à celui-ci.

9. Procédé de fonctionnement d'un système de commande (7) pour un véhicule automobile (1), dans lequel une interface utilisateur (16) graphique est générée sur un écran tactile (11) par un dispositif de commande (12) et un appareil de véhicule (6) est commandé en fonction d'au moins un mouvement de balayage (24) détecté par le biais de l'écran tactile (11), dans lequel l'interface utilisateur (16) présente un champ de commande (19) pour le réglage d'une valeur (21) d'un paramètre de fonctionnement (20) de l'appareil de véhicule (6) et le champ de commande (19) est activé par le dispositif de commande (12) en fonction d'une condition d'activation prédéterminée et, lorsque le champ de commande (19) est activé, la valeur (21) dans le champ de commande (19) est réglée en fonction de l'au moins un mouvement de balayage (24), dans lequel
lorsque le champ de commande (19) est activé, une partie détectée à l'extérieur du champ de commande (19) de l'au moins un mouvement de balayage (24) est associée au champ de commande (19) par le dispositif de commande (12) et la valeur est réglée en fonction de la partie détectée à l'extérieur du champ de commande (19) ;
**caractérisé en ce que**
le dispositif de commande (12) active le champ de commande (19) lors d'au moins un mouvement de balayage (24) si, en tant que condition d'activation, un point de départ (25) du mouvement de balayage (24) se situe à l'extérieur du champ de commande (19) et une direction de départ (27) du mouvement de balayage (24) est orientée le long d'un axe de direction (23) prédéterminé ou dans une direction prédéterminée.
